# EUROPÄISCHE PATENTSCHRIFT

(11) **EP 0 593 926 B1**
(45) Veröffentlichungstag und Bekanntmachung des Hinweises auf die Patenterteilung: **26.02.1997**
(21) Anmeldenummer: 93115329.0
(22) Anmeldetag: 23.09.1993
(51) Int. Cl.: A61C 8/00

(54) **Dentalimplantat**
Dental implant
Implant dentaire

(30) Priorität: 23.10.1992 DE 4235801
(43) Veröffentlichungstag der Anmeldung: 27.04.1994
(73) Patentinhaber: FRIATEC AG KERAMIK- UND KUNSTSTOFFWERKE, D-68229 Mannheim (DE)
(72) Erfinder: Hund, Walter, D-77704 Oberkirch-Stadelhofen (DE); Vizethum, Freimut, Dr.-Ing., D-68723 Schwetzingen (DE)
(74) Vertreter: Klose, Hans, Dipl.-Phys.

(56) Entgegenhaltungen:
- EP-A- 0 438 048
- US-A- 5 116 225

## Beschreibung

Die Erfindung bezieht sich auf ein Dentalimplantat gemäß den im Oberbegriff des Patenanspruchs 1 angegebenen Merkmalen.

Aus der EP-A-0 438 048 (US-A-5 199 873) ist ein derartiges Dentalimplantat bekannt, welches einen im Kiefer verankerbaren Implantatkörper aufweist. Der Implantatkörper enthält am koronalen Ende eine Ausnehmung, in welche ein Aufbauteil teilweise einsetzbar und mittels einer Halteschraube befestigbar ist. Zur rotationsgesicherten Fixation des Aufbauteils bezüglich des Implantatkörpers ist in der Ausnehmung wenigstens eine Anlagefläche vorgesehen, an welcher eine zugeordnete weitere Anlagefläche des Aufbauteils formschlüssig anliegt. Diese Anlageflächen sind in zweckmäßiger Weise als Hexagon ausgebildet und ergeben bei einfacher Handhabung den Rotationsstop. Derartige zweiphasige Dentalimplantate weisen jedoch ein rotatorisches Spiel der Verbindung zwischen dem Aufbauteil und dem Implantatkörper auf, welches Spiel bei der Positionierung zu einer Ungenauigkeit führt. Darüber hinaus können derartige Relativbewegungen sowohl zur Lockerung der Halteschraube als auch zu Reibkorrosion im Spaltbereich zwischen dem Aufbau und dem Implantatkörper führen. Aus Fertigungsgründen ist eine spielfreie Passung zwischen Aufbauteil und dem Implantatkörper nicht realisierbar, zumal ansonsten das Einsetzen der Aufbauteile nicht durchführbar wäre. Es zeigt sich in der Praxis, daß selbst bei hochgenauer Fertigung von Aufbauteil und Implantatkörper bei formschlüssigen Hexagon-Verbindungen ein Spiel in der Größenordnung von 2 bis 3 Winkelgraden um die Längsachse sich ergeben kann. Wesentlich bei derartigen Dentalimplantaten ist darüber hinaus eine definierte axiale Positionierung des Aufbauteils bezüglich des Implantatkörpers. So scheiden konische Passungen, welche bekanntlich eine exakte axiale Lagepositionierung nicht ermöglichen, zur Herstellung einer spielfreien Verbindung zwischen dem Aufbauteil und dem Implantatkörper aus.

Weiterhin ist aus der CH-A 642 838 ein Dentalimplantat bekannt, welches einen in den Kieferknochen einsetzbaren Implantatkörper, ein Kunststofflager sowie ein Aufbauteil oder einen Implantatträger aufweist. Das Kunststofflager wird in eine konische Bohrung des Implantatkörpers eingeschraubt und enthält eine koaxiale Innenbohrung mit Gewinde. In diese Innenbohrung wird ein Bolzen des Aufbauteils eingeschraubt. Durch plastische Verformung des Kunststofflagers wird eine pseudo-konische Klemmung erzielt, wobei eine dichte Verbindung mittels der Verschraubung hergestellt werden kann. Eine Rotationssicherung zwischen dem Aufbauteil einerseits und dem Implantatkörper andererseits ist nicht vorhanden.

Ferner ist aus FR-A-2 663 836 ein Dentalimplantat mit einem im wesentlichen hohlzylindrischen Implantatkörper bekannt. Das in den Implantatkörper einsetzbare Aufbauteil ist an seinem apikalen Ende geschlitzt ausgebildet und enthält innen eine mit Kugeln oder dergleichen gefüllte Durchgangsbohrung, welche am apikalen Ende verjüngt ist, so daß die Kugeln dort nicht hindurchtreten können. Mittels einer am koronalen Ende des Aufbauteils in der Durchgangsbohrung angeordneten Schraube können die Kugeln oder dergleichen verspannt werden, so daß das Aufbauteil am apikalen Ende aufgespreizt wird und in der Ausnehmung des Implantatkörpers verpreßt wird. Die Festlegung des Aufbauteils im Implantatkörper erfolgt somit ohne eine in den Implatatkörper geschraubte Halteschraube und ohne jegliche Rotationssicherung.

Des weiteren ist aus der US-A-4 588 381 ein Implantat bekannt, welches einen rohrförmigen Implantatkörper aufweist. Der Implantatkörper ist am apikalen Ende mit Schlitzen versehen, wobei die innere Bohrung konisch verjüngt ausgebildet ist. Beim Einschrauben des Aufbauteils wird der Implantatkörper am apikalen Ende aufgeweitet, um so die Verankerung zu erhalten. Hierbei erfolgt keine Fixierung aufgrund einer Kompression, wie es mittels einer Halteschraube erreichbar ist. Auch kann auf diese Weise keine exakte Lagepositionierung des Aufbauteils im Implantatkörper erreicht werden.

Schließlich ist aus der DE-A-4 000 112 ein Dentalimplantat bekannt, dessen Implantatkörper am apikalen Ende wiederum geschlitzt ausgebildet und mit einer zentralen Ausnehmung versehen ist. In diese Ausnehmung ist eine Schraube einschraubbar, deren Spitze beim Einschrauben das Ende des Implantatkörpers aufspreizt, um so die Verankerung im Knochen zu erhalten. Zur Befestigung des Aufbauteils oder einer Suprastruktur sowie deren Fixierung und Rotationssicherung liefert dieses Implantat keine weiterführenden Lehren.

Der Erfindung liegt daher die Aufgabe zugrunde, das Dentalimplantat der genannten Art dahingehend weiterzubilden, daß eine spielfreie Rotationssicherung des Aufbauteils bezüglich des Implantatkörpers dauerhaft und funktionssicher gewährleistet wird. Die bisher bekannten Komponenten des Dentalimplantats sollen im wentlichen beibehalten werden, wobei mit geringem zusätzlichem Fertigungsaufaufwand der Spielausgleich erreicht werden soll.

Die Lösung dieser Aufgabe erfolgt gemäß den im kennzeichnenden Teil des Patentanspruchs 1 angegebenen Merkmalen.

Das vorgeschlagene Dentalimplantat zeichnet sich durch einen funktionsgerechten Aufbau aus und gewährleistet zuversichtlich und dauerhaft die Rotationsstabilität des Aufbauteils bezgl. des Implantatkörpers. Im Bereich der Anlageflächen enthält das Aufbauteil einen Schlitz und durch das Einschrauben der Halteschraube erfolgt eine Verformung derart, daß wenigstens eine der Anlagenflächen des Mittelteils unmittelbar formschlüssig an der zugeordneten Anlagefläche des Implantatkörpers anliegt. Zu dieser radialen Verformung des Aufbauteils gelangt dessen mit einer Verengung versehene Innenfläche, welche bevorzugt als Ringschulter oder Konus ausgebildet ist, beim Einschrauben der Halteschraube mit einer zugeordneten Druckfläche der Halteschraube oder einer zusätzlichen Hülse derart in Eingriff, daß beim weiteren Eindrehen der Halteschraube nicht nur die axiale Zugspannung, sondern gleichzeitig auch die spielausgleichende Expansionskraft erreicht wird.

Die Druckfläche oder die Verengung sind aus deformierbarem Material gebildet. Derartiges Material weist eine geringere Härte auf als das Material der Halteschraube oder des Aufbauteils und ermöglicht, daß das Aufbauteil unter axialer Vorspannung im Implantatkörper befestigt ist und gleichwohl die radiale Aufweitung des Aufbauteils zum Spielausgleich erfolgt. So besteht beispielsweise der Bereich der Druckfläche aus dem genannten weicheren Material und kommt es mit der Verengung des Aufbauteils in Kontakt, so ist damit das Einschrauben der Halteschraube noch nicht beendet; ein ggfs. noch vorhandener Spalt zwischen der Stirnfläche des Implantatkörpers und der zugeordneten Ringschulter der Ausnehmung kann durch weiteres Einschrauben der Halteschraube geschlossen werden, bis schließlich die erforderliche Vorspannung zwischen der Stirnfläche und Ringschulter zwecks bakteriendichte Verbindung aufgebaut ist. Aufgrund des deformierbaren Materials im Bereich der Druckfläche oder der Verengung bei gegenseitlicher Anlage, wird also die axiale Einschraubbewegung nicht gestoppt. Das Material erfährt eine plastische oder elastische Verformung derart, daß trotz Anlage von Druckfläche und Verengung die Halteschraube axial noch weiter eingeschraubt werden kann und gleichzeitig die radiale Aufweitung des Aufbauteils durchgeführt wird. So kann beispielsweise die Druckfläche Bestandteil einer aus Kunststoff bestehenden Hülse sein oder entsprechend durch Beschichtung ringförmig oder in Form von Nocken auf die Außenfläche der Halteschraube gespritzt oder aufvulkanisiert sein. Entsprechend kann die genannte Verengung des Aufbauteils aus zum Vergleich zu dessen Werkstoff weicherem Material, sei es aus Kunststoff oder einem anderen Metall, bestehen.

Das Einbringen des insbesondere in einer Axialebene liegenden Schlitzes in das Aufbauteil erfordert nur einen minimalen zusätzlichen Fertigungsaufwand im Vergleich zu einem herkömmlichen Aufbauteil. Der Implantatkörper selbst kann unverändert beibehalten werden und das geschlitzte Aufbauteil ist in vollem Umfang kompatibel mit den bisher zum Einsatz gelangenden.

Weiterbildungen und besondere Ausgestaltungen des erfindungsgemäßen Dentalimplantats sind in den Unteransprüchen und der nachfolgenden Beschreibung angegeben.

Die Erfindung wird nachfolgend anhand eines in der Zeichnung dargestellten Ausführungsbeispiels näher erläutert. Es zeigen:
- Fig. 1: teilweise einen Schnitt durch das Dentalimplantat in einer Axialebene,
- Fig. 2: eine Ansicht des Aufbauteils,
- Fig. 3: einen Schnitt entlang Schnittlinie III, gemäß Fig. 2,
- Fig. 4: vergrößert das Detail IV gemäß Fig. 1,
- Fig. 5: schematisch eine Ausführungsvariante des vorstehenden Details IV.

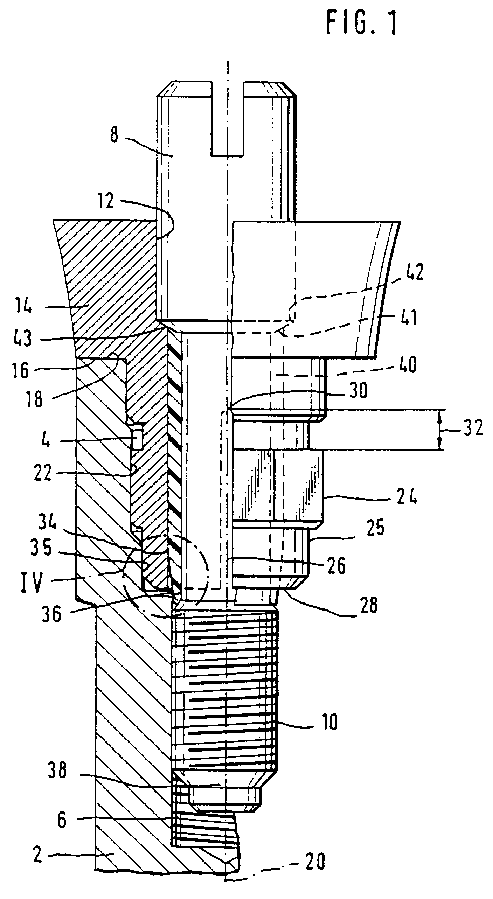

Fig. 1 zeigt in einer axialen Schnittebene teilweise einen Implantatkörper 2 mit einer Ausnehmung 4 am koronalen Ende. Der Implantatkörper 2 ist nur teilweise dargestellt und kann gemäß Fig. 1 nach unten zum apikalen Ende insbesondere als Stufenzylinder oder Stufenschraube ausgebildet sein. Koaxial zur Ausnehmung 4 und im Anschluß an diese enthält der Implantatkörper 2 ein Innengewinde 6, in welches eine Halteschraube 8 mit einem Außengewinde 10 eingeschraubt ist.

Die Halteschraube 8 durchdringt eine Innenbohrung 12 eines Aufbauteils 14, welches teilweise in die Ausnehmung 4 des Implantatkörpers 2 eingesetzt ist. Die Innenbohrung 12 ist als Durchgangsbohrung ausgebildet, so daß die Halteschraube 8 so weit durchgeführt werden kann, daß das genannte Außengewinde 10 in das Innengewinde 6 eingeschraubt werden kann, welches axial an die Ausnehmung 4 und den darin verankerten Teil des Aufbauteils 14 anschließt. Die Innenbohrung 12 des Aufbauteils 14 ist koaxial zur Ausnehmung 4 und/ oder dem Innengewinde 6 des Implantatkörpers 2 angeordnet.

Das Aufbauteil 14 liegt mit einer Ringschulter 16 an der koronalen Stirnfläche 18 des Implantatkörpers 2 unter Vorspannung fest an und eine definierte axiale Ausrichtung in Richtung der Längsachse 20 des Aufbauteils 14 bezüglich des Implantatkörpers 2 ist gewährleistet. Mittels der in den Implantatkörper 2 eingeschraubten Halteschraube 8 wird die Vorspannung aufgebracht und eine spaltfreie bakteriendichte Verbindung des Aufbauteils 14 mit dem Implantatkörper 2 ist sichergestellt. Wie ersichtlich, reicht die axiale Stirnfläche 16 bis zum Außenumfang des Implantatkörpers und ebenso die Ringschulter 16 bis zur Außen fläche des Aufbauteils 14. Diese unter Vorspannung dichte und spaltfreie Verbindung wird in Kombination mit der nachfolgend zu erläuterten Rotationssicherung erfindungsgemäß gewährleistet.

Innerhalb der Ausnehmung 4 enthält der Implantatkörper 2 erste Anlageflächen 22, welche parallel zur Längsachse 20 ausgerichtet sind. Zweckmäßig sind sechs derartige Anlageflächen 22 in Form eines Sechskants symmetrisch bezüglich der Längsachse 20 angeordnet. Entsprechend weist das Aufbauteil 14 den Anlageflächen 22 gegenüberliegende und zugeordnete zweite Anlageflächen 24 auf, um durch Formschluß eine Rotationssicherung des Aufbauteils 14 zu erhalten. Infolge von unabdingbaren Fertigungstoleranzen ist jedoch grundsätzlich ein gewisses Spiel zwischen den ersten Anlageflächen 22 und den zweiten Anlageflächen 24 gegeben.

Die ersten Anlagenflächen 22 und ebenso die zweiten Anlageflächen 24 sind bevorzugt im wesentlichen parallel zur Längsachse 20 angeordnet, doch können jene im Rahmen dieser Erfindung auch eine andere Ausrichtung bezüglich der Längsachse 20 aufweisen. Die einander gegenüberliegenden ersten Anlageflächen 22 und zweiten Anlageflächen 24 sind zweckmäßig im wesentlichen axial angeordnet, wobei ihre Normalen orthogonal zur Längsachse 20 ausgerichtet sind. Entscheidend ist, daß im Zusammenwirken mit der nachfolgend erläuterten Spielkompensation beim Einschrauben der Halteschraube 8 die einander zugeordneten Anlageflächen 22 und 24 zumindest teilweise aneinander gepreßt werden und somit eine gegenseitige Fixierung und Rotationssicherung des Aufbauteils 14 im Implantatkörper 2 gewährleistet ist.

Zur Spielkompensation weist das Aufbauteil 14 wenigstens einen Schlitz 26 auf, der vom freien Ende 28 des Aufbauteils 14 sich durch den Bereich der zweiten Anlageflächen 24 erstreckt. Der Schlitz 26 erstreckt sich von der Außenfläche des Aufbauteils 14 durchgehend bis zur Innenfläche desselben. Zweckmäßig ist in der gleichen Axialebene wie der hier sichtbare Schlitz 26 hinter der Zeichenebene ein zweiter Schlitz entsprechend angeordnet. Diese beiden Schlitze werden im gleichen Arbeitsgang in einfacher Weise in das Aufbauteil 14 eingebracht und ermöglichen das radiale Aufweiten desselben im Bereich seiner Anlageflächen 24. Der Grund 30 des Schlitzes 26 ragt in axialer Richtung über das Ende der zweiten Anlageflächen 24 in einem vorgegebenen Abstand 32 hinaus. Damit wird in zweckmäßiger Weise eine im wesentlichen plane, formschlüssige Anlage der ersten und zweiten Anlageflächen nach Aufweitung des Aufbauteils 14 sichergestellt.

Das Aufbauteil 14 weist innen eine Verengung 34 auf, wobei der Innendurchmesser im Bereich des freien Endes 28 kleiner ist als im mittleren Bereich, in welchem außen die zweiten Anlageflächen 24 liegen. Diese Verengung 34 ist hier als ein Ringbund ausgebildet, wobei die Kanten zweckmäßigerweise konisch abgeschrägt bzw. mit einer Fase versehen sind. Der Verengung 34 zugeordnet weist die Halteschraube 8 eine Druckfläche 36 auf. Diese Druckfläche 36 ist zweckmäßig als eine konische Fläche ausgebildet, deren Konusspitze 38 dem apikalen Ende zugewandt liegt. Beim Einschrauben der Halteschraube 8 gelangt die Druckfläche 36 mit der Verengung 34 in Eingriff und es werden radial gerichtete Kraftkomponenten auf das Aufbauteil 14 wirksam. Beim weiteren Einschrauben der Halteschraube 3 wird aufgrund des Schlitzes 26 ein radiales Aufweiten ermöglicht, so daß vorhandenes Spiel zwischen den ersten und zweiten Anlageflächen verschwindet. Die radial einander gegenüberliegenden Anlageflächen 22 und 24 liegen zumindest teilweise formschlüssig aneinander an, so daß Relativbewegungen um die Längsachse 20 funktionssicher und dauerhaft unterbunden werden. Da die in axialer Richtung einander gegenüberliegende Ringschulter und Stirnfläche beim Einschrauben der Halteschraube 8 fest und dicht aneinander gepreßt werden, wird gleichzeitig eine exakte axiale Ausrichtung des Aufbauteils 14 bezüglich des Implantatkörpers 2 sichergestellt.

Das Aufbauteil 14 weist in axialer Richtung zwischen den zweiten Anlageflächen 24 und dem freien Ende 28 einen zylindrischen Bereich 25 auf. Der Durchmesser dieses zylindrischen Bereiches ist erfindungsgemäß kleiner als der Innendurchmesser des radial gegenüberliegenden Bereiches 35 der Ausnehmung 4. Die Durchmesserdifferenz der Bereiche 25 und 35 ist im Rahmen der Erfindung derart vorgegeben, daß das Einschrauben der Halteschraube 8 und das Aufspreizen des geschlitzten Aufbauteils 14 ungehindert durchführbar ist und die einander zugeordneten Anlageflächen 22 und 24 aneinandergepreßt werden.

Mit gestrichelten Linien ist eine Hülse 40 gemäß einer besonderen Ausgestaltung angedeutet. Die Halteschraube 8 durchdringt die Hülse 40 und weist einen entsprechend reduzierten Außendurchmesser auf. Die Druckfläche 36 ist bei dieser besonderen Ausgestaltung kein integraler Bestandteil der Halteschraube 8, doch gleichwohl werden beim Einschrauben der Halteschraube 8 in den Implantatkörper 2 über die Druckfläche 36 die radialen Kraftkomponenten zur Aufweitung des Aufnahmeteils 14 wirksam. Die Hülse 40 liegt mit ihrer in der gemäß Fig. 1 oberen Stirnfläche 41 an einem Ringbund 42 der Halteschraube 8 bzw. deren Schraubenkopf an. Die Halteschraube 8 legt zweckmäßig über den Ringbund 42 an einer Ringschulter 43 des Aufbauteils 14 an. Beim Festziehen der Halteschraube 8 im Implantatkörper 2 wird somit über die Ringschulter 43 auf das Aufbauteil 14 die axiale Vorspannung aufgebracht, welche eine spaltfreie und bakteriendichte Anlage des Aufbauteils 14 an der axialen Stirnfläche 18 des Implantatkörpers 2 ergibt. Beim Einschrauben der Halteschraube 8 wird somit auf die Hülse 40 zunächst eine Axialkraft wirksam bis die Druckfläche 36 mit der Verengung 34 in Eingriff gelangt und daraufhin auf das Aufbauteil 14 die Radialkraftkomponenten einwirken und aufweiten.

Die Hülse 40 ist bevorzugt derart deformierbar, daß zum einen die erläuterte Aufweitung des Aufbauteils 14 erfolgt und andererseits aber auch im Hinblick auf Fertigungstoleranzen praktisch keine Beeinträchtigung der exakten axialen Lagepositionierung des Aufnahmeteils 14 bezüglich des Implantatkörpers 2 erfolgt. Gelangt die Druckfläche 36 mit der Verengung 34 bereits dann in Eingriff, wenn noch ein vergleichsweise großer Spalt zwischen der axialen Stirnfläche 18 und der Ringschulter 16 des Aufbauteils 14 vorhanden ist, so erfolgt zunächst das Aufweiten des Aufnahmeteils 14 bis die ersten und zweiten Anlageflächen spielfrei aneinander liegen. Beim weiteren Eindrehen erfolgt eine Deformation der Hülse 40 bis der genannte Spalt vollständig gegen Null geht und die axiale Verspannung mit der gewünschten Vorspannkraft zwischen dem Aufnahmeeil 14 und dem Implantatkörper 2 erreicht ist. Der Vollständigkeit halber sei angemerkt, daß bei dieser Ausführungsform selbstverständlich der Kopfkreisdurchmesser des Außengewindes 10 kleiner ist als der Innendurchmesser der Hülse 40, so daß die Halteschraube 8 durch die Hülse 40 in der angedeuteten Weise hindurchgesteckt werden kann.

Bei der erläuterten Ausgestaltung besteht die Hülse 40 aus einem weicheren Werkstoff als das Aufbauteil 14 und/oder die Halteschraube 8, wobei hier insbesondere auf Kunststoff verwiesen sei. Nach Anlage der Druckfläche 36 an der Verengung 34 wird bei weiterem Einschrauben der Halteschraube 8 das Material plastisch oder elastisch verformt, wobei Teilbereiche entlang der Außenfläche der Hülse verschoben werden. Es erfolgt hierbei ein Druckaufbau, welcher zur radialen Aufweitung des Aufbauteils in diesen Bereich führt. Die Hülse 40 kann im Rahmen der Erfindung als separates, auf die Schraube aufgeschobenes Bauteil ebenso ausgebildet sein, wie durch Beschichtung der Außenfläche der Halteschraube integral mit dieser ausgebildet sein. Auch kann die Druckfläche Bestandteil von über den Umfang der Halteschraube verteilt angeordnete Noppen, Vorsprünge oder dergleichen ausgebildet sein, welche bei Anlage an der innenliegenden Verengung des Aufbauteils in der erläuterten Weise deformierbar und die radiale Aufweitung des Aufbauteils bedingen. Desweiteren kann im Rahmen der Erfindung die Verengung gleichfalls aus entsprechend weicherem Material bestehen, wobei außer der erläuterten Ausbildung als Ringbund eine andere Geometrie, wie insbesondere Noppen, Vorsprünge oder ähnliches vorgegeben werden können.

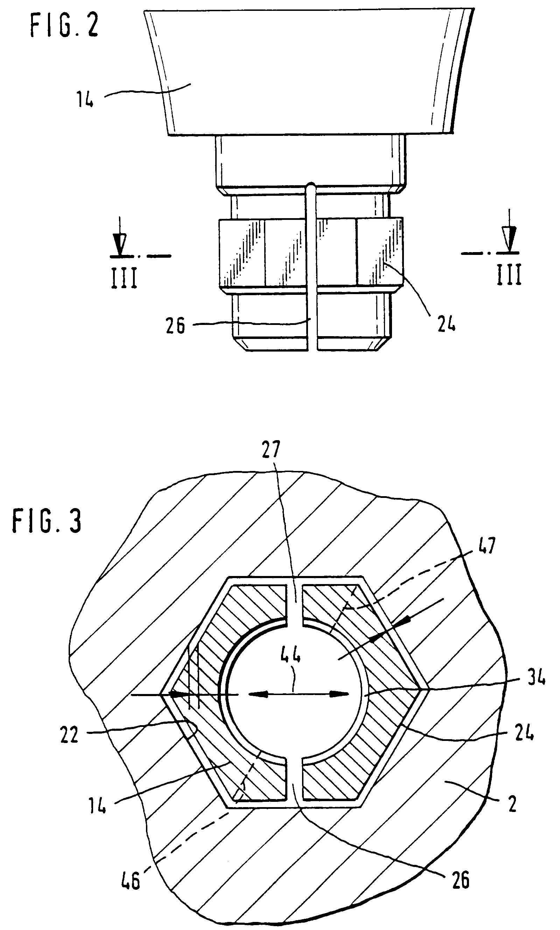

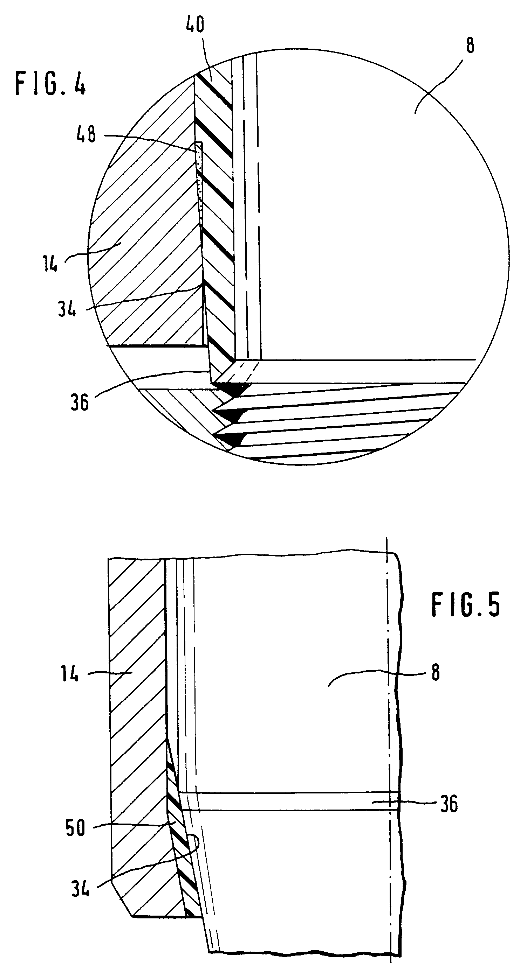

Fig. 2 und 3 zeigen in einer seitlichen Ansicht bzw. vergrößert in einer Radialebene entlang Schnittlinie III das Aufnahmeteil 14. Aus Fig. 3 sind die als Sechskant ausgebildeten ersten bzw. zweiten Anlageflächen 22 bzw. 24 des Implantatkörpers 2 bzw. des Aufbauteils 14 gut zu erkennen. Die hier erkennbaren beiden Schlitze 26, 27 sind jeweils in der Mitte einer der zweiten Anlageflächen 14 angeordnet. Zur Verdeutlichung der Zusammenhänge ist das Spiel zwischen den ersten und zweiten Anlageflächen 22 bzw. 24 vergrößert dargestellt, doch sei festzuhalten, daß bei herkömmlichen Dentalimplantaten bei einem Spiel von 0,01 bis 0,02 mm eine Rotation des Aufnahmeteils 14 bezüglich des Implantkörpers 2 in der Größenordnung von 2 bis 3 Winkelgraden bezogen auf die Längsachse 20 sich ergibt. Gelangt in der oben erläuterten Weise die Druckfläche 36 beim Einschrauben der Halteschraube an die Verengung 34, so werden die mittels den Schlitzen 26, 27 getrennten Bereiche des Aufnahmeteils 14 in Richtung des Doppelpfeiles 44 radial auseinander gedrückt, mit der Folge, daß das Spiel zumindest zwischen einem Teil der einander paarweise zugeordneten Anlageflächen des Aufbauteils 14 und des Implantates zu Null wird.

In Fig. 3 sind mit gestrichelten Linien 46, 47 alternative Anordnungen der beiden oben erläuterten Schlitze des Aufnahmeteiles 14 angedeutet. Diese Schlitze liegen nunmehr in den Ecken zwischen zwei nebeneinanderliegenden Anlageflächen 24. Unter Berücksichtigung der Winkel ergibt sich, daß für diese alternative Ausführungsform die notwendige Aufweitung etwas größer ist als bei der Ausführungsform, bei welcher die Schlitze 26, 27 mitten durch zwei diametral angeordnete Anlageflächen 24 verlaufen.

Fig. 4 zeigt vergrößert im Detail den Bereich der Verengung 34 des Aufnahmeteils 14 im Zusammenwirken mit der konischen Druckfläche 36 der Halteschraube 8. Nach Anlage der Druckfläche 36 an der Hülse 40 aus weicherem Material an der stufenförmigen Verengung 34 erfolgt beim Eindrehen der Halteschraube 8 in das Gewinde des Implantatkörpers in den schwarz eingetragenen Bereich 48 eine Verschiebung des weicheren, deformierbaren Materials der Hülse 4 und letztendlich eine Druckbelastung mit der Folge einer radialen Aufweitung des Aufbauteils 14.

Fig. 5 zeigt schematisch die kinematische Umkehrung derart, daß die Druckfläche 36 der Halteschraube 8 durch eine Stufe gebildet wird, welche an der als Konus ausgebildeten Verengung 34 des Aufnahmeteils 14 anliegt. Die Verengung 34 wird durch eine Schicht 50 gebildet, welche auf die Innenfläche des Aufbauteils 14 in der dargestellten Weise aufgebracht ist. Diese Schicht 50 besteht aus deformierbarem Material, welches weicher ist als das Material der Halteschraube 8 mit der zugeordneten Druckfläche 36. Beim weiteren Einschrauben der Halteschraube 8 erfolgt in dem gemäß Fig. 5 axial nach unten an die Druckfläche 36 anschließenden Bereich der Schicht 50 eine Materialverschiebung oder Verpressung mit Druckaufbau zur radialen Aufweitung des Aufnahmeteils 14. Ersichtlich wird die Druckfläche durch gestufte Außendurchmesser der Halteschraube 8 erreicht, wobei der Durchmesser zum apikalen Ende kleiner ist. Die Druckfläche 36 kann zudem eine kleine Fase entsprechend dem Konuswinkel der konischen Verengung 34 aufweisen.

### Bezugszeichen

- 2: Impantatkörper
- 4: Ausnehmung
- 6: Innengewinde
- 8: Halteschraube
- 10: Außengewinde
- 12: Innenbohrung
- 14: Aufbauteil
- 16: Ringschulter von 14
- 18: Stirnfläche von 2
- 20: Längsachse
- 22: erste Anlagefläche von 2
- 24: zweite Anlagefläche von 14
- 25: zylindrischer Bereich von 14
- 26, 27: Schlitz
- 28: freies Ende von 14
- 30: Grund von 26
- 32: Abstand
- 34: Verengung
- 35: Bereich von 4
- 36: Druckfläche
- 38: Konusspitze
- 40: Hülse
- 41: Stirnfläche von 40
- 42: Ringbund
- 43: Ringschulter von 14
- 44: Doppelpfeil
- 46, 47: Linie
- 48: Bereich
- 50: Schicht

## Patentansprüche

1. Dentalimplantat mit einem im Kiefer verankerbaren Implantatkörper (2) und einem Aufbauteil (14), welches zumindest teilweise in eine am koronalen Ende des Implantatkörpers angeordnete Ausnehmung (4) einsetzbar und mittels einer Halteschraube (8) im Implantatkörper befestigbar ist, wobei die Ausnehmung wenigstens eine erste Anlagefläche (22) für eine zugeordnete zweite Anlagefläche (24) des Aufbauteils zur Rotationssicherung enthält,
dadurch gekennzeichnet, daß das Aufbauteil (14) wenigstens einen, insbesondere von seinem freien Ende (28) bis in den Bereich der zweiten Anlagefläche (24) sich erstreckenden Schlitz (26) aufweist,
daß das Aufbauteil (14) eine radial innenliegende Verengung (34) aufweist
und daß der Halteschraube (8) eine Druckfläche (36) zugeordnet ist, welche beim Einschrauben der Halteschraube (8) in den Implantatkörper (2) mit der Verengung (34) derart in Eingriff bringbar ist, daß eine radiale Aufweitung des Aufbauteils (14) und zumindest teilweise eine feste Anlage der ersten und zweiten Anlageflächen (22, 24) erfolgt.

2. Dentalimplantat, insbesondere nach Anspruch 1, dadurch gekennzeichnet, daß die Verengung (34) oder die Druckfläche (36) aus deformierbarem Material und/oder weicherem Material als die Halteschraube (8) oder das Aufnahmeteil (14) besteht.

3. Dentalimplantat nach Anspruch 1 oder 2, dadurch gekennzeichnet, daß die Druckfläche (36) an einer Hülse (40) angeordnet ist, welche die Halteschraube (8) umgibt und welche mit einer Stirnfläche (41) an einem Ringbund (42) der Halteschraube (8), insbesondere deren Schraubenkopf, anliegt.

4. Dentalimplantat nach einem der Ansprüche 1 bis 2, dadurch gekennzeichnet, daß zwei diametral liegende Schlitze (26,27) im Aufbauteil (24) vorgesehen sind und/oder daß der Schlitz (26,27) vollständig die Anlagefläche (24) durchdringt, wobei bevorzugt der Schlitzgrund (30) einen Abstand (32) zur benachbarten Kante der zweiten Anlagefläche (24) aufweist.

5. Dentalimplantat nach einem der Ansprüche 1 bis 4, dadurch gekennzeichnet, daß die Druckfläche (36) als Konus ausgebildet ist, dessen Spitze (38) dem freien Ende (28) zugewandt liegt.

6. Dentalimplantat nach einem der Ansprüche 1 bis 5, dadurch gekennzeichnet, daß die Verengung (34) als eine konische Fläche ausgebildet ist, deren Konusspitze dem freien Ende (28) zugewandt liegt.

7. Dentalimplantat nach einem der Ansprüche 1 bis 6, dadurch gekennzeichnet, daß das Aufbauteil (14) mit einer Ringschulter (16) an einer axialen Stirnfläche (18) des Implantatkörpers (2) unter Vorspannung anliegt.

8. Dentalimplantat nach einem der Ansprüche 1 bis 7, dadurch gekennzeichnet, daß nach dem Einschrauben die Halteschraube (8) unter einer Zugspannung steht und insbesondere über einen Ringbund (42) des Schraubenkopfes an einer Ringschulter (43) des Aufbauteils (14) unter Vorspannung anliegt.

9. Dentalimplantat nach einem der Ansprüche 1 bis 8, dadurch gekennzeichnet, daß das Aufbauteil (14) wenigstens zwei, bevorzugt diametral angeordnete Schlitze (26, 27) aufweist, welche insbesondere in einer Axialebene des Aufbauteils (14) liegen.

## Claims

1. Dental implant comprising an implant body (2) which can be anchored in the jawbone and a superstructure part (14) which can be inserted at least partially into a recess (4) arranged at the coronal end of the implant body and can be secured in the implant body by means of a holding screw (8), the recess including at least a first contact surface (22) for an associated second contact surface (24) of the superstructure part for securing it against rotation, characterised in that the superstructure part (14) has at least one slot (26) extending in particular from its free end (28) to the region of the second contact surface (24), that the superstructure part (14) has a radially internal narrowed portion (34), and that a bearing surface (36) is associated with the holding screw (8) and can be brought into engagement with the narrowed portion (34) when the holding screw (8) is screwed into the implant body (2) in such a manner that the superstructure part (14) is radially expanded and the first and second contact surfaces (22, 24) at least partially firmly contact one another.

2. Dental implant, in particular according to claim 1, characterised in that the narrowed portion (34) or the bearing surface (36) consists of more deformable material and/or softer material than the holding screw (8) or the superstructure part (14).

3. Dental implant according to claim 1 or claim 2, characterised in that the bearing surface (36) is arranged on a sleeve (40) which surrounds the holding screw (8) and bears via an end face (41) against an annular collar (42) of the holding screw (8), in particular the screw head thereof.

4. Dental implant according to one of claims 1 to 2, characterised in that two diametrical slots (26, 27) are provided in the superstructure part (14) and/or that the slot (26, 27) extends completely through the contact surface (24), the bottom (30) of the slot preferably being at a distance (32) from the adjacent edge of the second contact surface (24).

5. Dental implant according to one of claims 1 to 4, characterised in that the bearing surface (36) is designed as a cone, the vertex (38) of which is directed towards the free end (28).

6. Dental implant according to one of claims 1 to 5, characterised in that the narrowed portion (34) is designed as a conical surface, the cone vertex of which is directed towards the free end (28).

7. Dental implant according to one of claims 1 to 6, characterised in that the superstructure part (14) is compressed via an annular shoulder (16) against an axial end face (18) of the implant body (2).

8. Dental implant according to one of claims 1 to 7, characterised in that the holding screw (8) is under tensile stress when it is screwed in and in particular is compressed via an annular collar (42) of the screw head against an annular shoulder (43) of the superstructure part (14).

9. Dental implant according to one of claims 1 to 8, characterised in that the superstructure part (14) has at least two preferably diametrically arranged slots (26, 27) situated in particular in an axial plane of the superstructure part (14).

## Revendications

1. Implant dentaire avec un corps d'implant (2) s'ancrant dans la mâchoire et une pièce rapportée (14), qui peut s'enfoncer au moins partiellement dans un creux (4) placé à l'extrémité coronale du corps d'implant et peut se fixer dans le corps d'implant au moyen d'une vis d'arrêt (8), le creux comprenant au moins une première surface d'appui (22) pour une deuxième surface d'appui (24) associée de la pièce rapportée à des fins d'immobilisation en rotation, ***caractérisé en ce que*** la pièce rapportée (14) présente au moins une fente (26) s'étendant en particulier de son extrémité libre (28) jusqu'au niveau de la deuxième surface d'appui (24), ***en ce que*** la pièce rapportée (14) présente un rétrécissement (34) situé à l'intérieur dans le sens radial et ***en ce qu***'à la vis d'arrêt (8) est associée une surface de pression (36) qui, lors du vissage de la vis d'arrêt (8) dans le corps d'implant (2), peut être amenée en prise avec le rétrécissement (34) de telle sorte qu'il en résulte un élargissement radial de la pièce rapportée (14) et au moins partiellement un appui ferme des première et deuxième surfaces d'appui (22, 24).

2. Implant dentaire, en particulier selon la Revendication 1, ***caractérisé en ce que*** le rétrécissement (34) ou la surface de pression (36) est constitué d'une matière déformable et/ou plus tendre que la vis d'arrêt (8) ou la pièce rapportée (14).

3. Implant dentaire selon la Revendication 1 ou 2, ***caractérisé en ce que*** la surface de pression (36) est placée sur une douille (40) qui entoure la vis d'arrêt (8) et qui s'appuie avec une surface frontale (41) contre une collerette annulaire (42) de la vis d'arrêt (8), en particulier de sa tête de vis.

4. Implant dentaire selon l'une des Revendications 1 à 2, ***caractérisé en ce que*** deux fentes diamétralement opposées (26, 27) sont prévues dans la pièce rapportée (14) et/ou ***en ce que*** la fente (26, 27) traverse complètement la surface d'appui (24), le fond (30) de la fente présentant de préférence une distance (32) au bord voisin de la deuxième surface d'appui (24).

5. Implant dentaire selon l'une des Revendications 1 à 4, ***caractérisé en ce que*** la surface de pression (36) est conformée en cône, dont le sommet (38) est tourné vers l'extrémité libre (28).

6. Implant dentaire selon l'une des Revendications 1 à 5, ***caractérisé en ce que*** le rétrécissement (34) est conformé en surface conique dont le sommet est tourné vers l'extrémité libre (28).

7. Implant dentaire selon l'une des Revendications 1 à 6, ***caractérisé en ce que*** la pièce rapportée (14) s'appuie sous précontrainte, avec un épaulement annulaire (16), contre une surface frontale axiale (18) du corps d'implant (2).

8. Implant dentaire selon l'une des Revendications 1 à 7, ***caractérisé en ce qu***'après le vissage, la vis d'arrêt (8) se trouve sous une contrainte de traction et, en particulier, s'appuie sous précontrainte, par l'intermédiaire d'une collerette annulaire (42) de la tête de vis, contre un épaulement annulaire (43) de la pièce rapportée (14).

9. Implant dentaire selon l'une des Revendications 1 à 8, ***caractérisé en ce que*** la pièce rapportée (14) présente au moins deux fentes diamétralement opposées (26, 27) qui se trouvent en particulier dans un plan axial de la pièce rapportée (14).
